(19) Europäisches Patentamt
European Patent Office
Office européen des brevets

(11) **EP 4 311 059 A1**

(12) **EUROPÄISCHE PATENTANMELDUNG**

(43) Veröffentlichungstag:
**24.01.2024 Patentblatt 2024/04**

(21) Anmeldenummer: **22185510.9**

(22) Anmeldetag: **18.07.2022**

(51) Internationale Patentklassifikation (IPC):
*H02J 3/32* (2006.01)    *H02J 3/38* (2006.01)
*H02J 3/48* (2006.01)

(52) Gemeinsame Patentklassifikation (CPC):
**H02J 3/322; H02J 3/381; H02J 3/48;** H02J 2203/10

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Amthor, Arvid**
**98631 Grabfeld OT Nordheim (DE)**

• **Schreck, Sebastian**
**90439 Nürnberg (DE)**
• **Schütz, Thomas**
**90765 Fürth (DE)**
• **Sudhoff, Robin**
**91052 Erlangen (DE)**
• **Thiem, Sebastian**
**91413 Neustadt an der Aisch (DE)**

(74) Vertreter: **Siemens Patent Attorneys**
**Postfach 22 16 34**
**80506 München (DE)**

(54) **VORRICHTUNG UND VERFAHREN ZUR AGGREGATION SOWIE STEUERUNG VON ELEKTRISCHEN LEISTUNGEN INNERHALB EINES STROMNETZES**

(57)     Es wird eine Vorrichtung (1) zur Aggregation von elektrischen Leistungen innerhalb eines Stromnetzes (2) vorgeschlagen, welche eine bezüglich mehrerer Energiesysteme i (3) zentrale Aggregatoreinheit (4) umfasst. Die Vorrichtung (1) ist dadurch gekennzeichnet, dass die Aggregatoreinheit (4) dazu ausgebildet ist, von jedem der Energiesysteme i (3) wenigstens eine für einen festgelegten Zeitbereich T vorgesehene Einspeiseleistung $P_{i;t}^{\mathrm{in}}$ und/oder Ausspeiseleistung $P_{i;t}^{\mathrm{out}}$ zu empfangen, wobei die Aggregatoreinheit (4) weiterhin dazu eingerichtet ist, die empfangenen Einspeiseleistungen $P_{i;t}^{\mathrm{in}}$ und Ausspeiseleistungen $P_{i;t}^{\mathrm{out}}$ zu einer Gesamtleistung $P_{t}^{\mathrm{agg}}$ zu aggregieren, und die ermittelte Gesamtleistung $P_{t}^{\mathrm{agg}}$ an eine Netzleitvorrichtung (5) des Stromnetzes (2) zu übermitteln.

Weiterhin betrifft die Erfindung ein Verfahren zur Aggregation von elektrischen Leistungen innerhalb eines Stromnetzes (2) .

**FIG 1**

EP 4 311 059 A1

**Beschreibung**

Die Erfindung betrifft eine Vorrichtung gemäß dem Oberbegriff des Patentanspruches 1 sowie ein Verfahren gemäß dem Oberbegriff des Patentanspruches 8.

An ein elektrisches Verteilnetz (Stromnetz) sind typischerweise mehrere Energiesysteme, ebenfalls Teilnehmer genannt, jeweils über einen Netzanschlusspunkt angebunden. Hierbei können mehrere Energiesysteme über einen gemeinsamen Netzanschlusspunkt physikalisch an dem Stromnetz angebunden sein.

Die Energiesysteme umfassen typischerweise mehrere energietechnische Anlagen (Betriebsmittel), die elektrische Energie in das Stromnetz einspeisen (Erzeuger) oder elektrische Energie aus diesem ausspeisen (Verbraucher/Lasten). Weiterhin können die Energiesysteme Energiespeicher zur Speicherung elektrischer Energie umfassen, die in das Stromnetz einspeisen und ausspeisen.

Durch die energietechnischen Anlagen der Energiesysteme, das heißt durch ihre Betriebsmittel, können Leistungsspitzen entstehen, die zu einer erhöhten Belastung des Stromnetzes führen. Erzeugungsspitzen treten beispielsweise durch die Rückspeisung von Photovoltaikanlagen auf. Lastspitzen können durch das Laden eines oder mehrerer elektrischer Fahrzeuge entstehen. Hierbei können die Gradienten der genannten Leistungsspitzen durch einen Batteriespeicher, beispielweise zur Erhöhung der Eigenverbrauchsquote bei Photovoltaikanlagen, verstärkt werden.

Im Hinblick auf die Dekarbonisierung wird die dezentrale erneuerbare Energieerzeugung weiter ausgebaut und insbesondere der Wärme- und Transportsektor elektrifiziert. Hierbei gibt es einen weiteren Zubau dezentraler Betriebsmittel, wie beispielsweise durch Photovoltaikanlagen, Wärmepumpen oder Ladesäulen.

Ein unkoordinierter Betrieb der genannten Anlagen beziehungsweise der Energiesysteme kann zu gleichzeitigen und gleichgerichteten Spitzen im elektrischen Netz führen. Das ist beispielsweise dann der Fall, wenn alle Teilnehmer gleichzeitig auf dasselbe externe Preissignal, beispielsweise bei zeitvariablen Tarifen, reagieren. Der Netzbetreiber muss daher mittels seiner Netzleittechnik technische Maßnahmen ergreifen, um den sicheren Betrieb des Stromnetzes aufrecht zu halten und Anlagen zum Betrieb des Netzes, wie beispielsweise Ortsnetztransformatoren, vor einer Überlastung zu schützen beziehungsweise die technischen Grenzen des Verteilnetzes, beispielsweise seine Spannungsgrenzwerte, einzuhalten. Gegebenenfalls ist hierzu ein weiterer Netzausbau erforderlich.

Die Energiesysteme im elektrischen Netz sind jedoch typischerweise nicht dazu ausgebildet, ihre Betriebsmittel durch eine angepasste Betriebsführung derart zu verwenden, dass Leistungsspitzen anderer Energiesysteme ausgeglichen werden. Ein Grund hierfür ist, dass den Energiesystemen keine Informationen über den Zustand des Stromnetzes, beispielsweise am Ortsnetztransformator, vorliegt.

Zur Vermeidung von Leistungsspitzen werden in Deutschland beispielsweise folgende Maßnahmen ergriffen:

- Die maximale Leistungseinspeisung von Photovoltaikanlagen bis 25 kWp wird am Verknüpfungspunkt mit dem Netz auf 70 Prozent der installierten Leistung begrenzt beziehungsweise im Fall mit einem Batteriespeicher auf 50 Prozent.
- Bei der Inbetriebnahme von Ladesäulen für elektrische Fahrzeuge mit einer Ladeleistung größer als 12 kW ist eine vorherige Zustimmung des Netzbetreibers erforderlich.
- Netzbetreiber bieten Heizstromtarife an, für dessen Nutzung, beispielsweise zum Betrieb einer Wärmepumpe, die Wärmepumpe beim Netzbetreiber angemeldet werden und ein eigener Zähler in Betrieb genommen werden muss.

Dadurch wird eine Installation neuer Betriebsmittel erschwert und erzeugte erneuerbare Energie wird möglicherweise unnötig abgeregelt.

Zur besseren Koordinierung der Einspeisung von erneuerbaren Energien kann weiterhin ein lokaler Energiemarkt vorgesehen sein. Beispielsweise ist eine solche Energiemarktplattform aus dem Dokument EP 3518369 A1 bekannt.

Der vorliegenden Erfindung liegt die Aufgabe zugrunde, eine Vorrichtung zur Entlastung eines Stromnetzes mittels einer Aggregation bereitzustellen, welche insbesondere Leistungsspitzen innerhalb des Stromnetzes reduziert oder vermeidet.

Die Aufgabe wird durch eine Vorrichtung mit den Merkmalen des unabhängigen Patentanspruches 1 sowie durch ein Verfahren mit den Merkmalen des unabhängigen Patentanspruches 8 gelöst. In den abhängigen Patentansprüchen sind vorteilhafte Ausgestaltungen und Weiterbildungen der Erfindung angegeben.

Die erfindungsgemäße Vorrichtung zur Aggregation von elektrischen Leistungen innerhalb eines Stromnetzes umfasst eine bezüglich mehrerer Energiesysteme *i* zentrale Aggregatoreinheit. Die erfindungsgemäße Vorrichtung ist dadurch gekennzeichnet, dass die Aggregatoreinheit dazu ausgebildet ist, von jedem der Energiesysteme *i* wenigstens eine für einen festgelegten Zeitbereich T vorgesehene Einspeiseleistung $P_{i;t}^{\mathrm{in}}$ und/oder Ausspeiseleistung $P_{i;t}^{\mathrm{out}}$ zu empfangen, wobei die Aggregatoreinheit weiterhin dazu eingerichtet ist, die empfangenen Einspeiseleistungen $P_{i;t}^{\mathrm{in}}$ und Ausspeiseleistungen $P_{i;t}^{\mathrm{out}}$ zu einer Gesamtleistung $P_t^{\mathrm{agg}}$ zu aggregieren, und die ermittelte Gesamtleistung

$P_t^{\text{agg}}$ an eine Netzleitvorrichtung des Stromnetzes zu übermitteln.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Beispielsweise umfasst die Aggregatoreinheit hierzu eine oder mehrere Recheneinheiten.

Aus struktureller Sicht definiert, insbesondere der IPCC Fifth Assessment Report, ein Energiesystem als: "Alle Komponenten, die sich auf die Erzeugung, Umwandlung, Lieferung und Nutzung von Energie beziehen" (Annex I, Seite 1261).

Energiesysteme umfassen typischerweise mehrere Komponenten, insbesondere energietechnische Anlagen, beispielsweise Energiewandlungsanlagen, Verbrauchsanlagen und/oder Speicheranlagen. Hierbei können Energiesysteme mehrere Energieformen erzeugen und/oder bereitstellen (multimodale Energiesysteme). Insbesondere stellt ein solches Energiesystem für einen Verbraucher, beispielsweise ein Gebäude, eine Industrieanlage oder private Anlagen, eine oder mehrere Energieformen bereit, wobei die Bereitstellung insbesondere durch eine Umwandlung verschiedener Energieformen, durch einen Transport verschiedener Energieformen und/oder durch gespeicherte Energieformen erfolgt. Mit anderen Worten werden die verschiedenen Energieformen, beispielsweise Wärme, Kälte oder elektrische Energie, mittels des multimodalen Energiesystems bezüglich ihrer Erzeugung, ihrer Bereitstellung und/oder ihrer Speicherung gekoppelt. Energiesysteme sind beispielsweise Gebäude, insbesondere Wohngebäude und/oder Bürogebäude und/oder industrielle Anlagen.

Als energietechnische Anlagen kann das Energiesystem eine oder mehrere der folgenden Komponenten umfassen: Stromgeneratoren, Kraftwärmekopplungsanlagen, insbesondere Blockheizkraftwerke, Gasboiler, Dieselgeneratoren, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Energiespeicher, insbesondere Batteriespeicher, Biomasseanlagen, Biogasanlagen, Müllverbrennungsanlagen, industrielle Anlagen, konventionelle Kraftwerke und/oder dergleichen.

Gemäß der vorliegenden Erfindung beabsichtigt jedes der Energiesysteme mittels seiner energietechnischen Anlagen eine zeitabhängige Leistung $P_{i;t}^{\text{in}}$ oder $P_{i;t}^{\text{out}}$ innerhalb des Zeitbereiches in das Stromnetz einzuspeisen beziehungsweise auszuspeisen. Die vorgesehenen Leistungen werden beispielsweise durch eine Vorhersage der jeweiligen Energiesysteme ermittelt. Die genannten Leistungen werden an die erfindungsgemäß vorgesehene Aggregatoreinheit übermittelt, welche die übermittelten Leistungen beziehungsweise vorgesehenen Leistungswerte empfängt.

Erfindungsgemäß ist die Aggregatoreinheit bezüglich der Energiesysteme eine zentrale Einheit, die zudem dazu eingerichtet ist, die empfangenen Leistungen zu einer Gesamtleistung beziehungsweise einem Gesamtleistungswert zu aggregieren. Hierbei weisen besonders bevorzugt Einspeiseleistungen und Ausspeiseleistungen ein verschiedenes Vorzeichen innerhalb der Gesamtleistung auf. Anschließend übermittelt die Aggregatoreinheit die ermittelte und für den Zeitbereich vorgesehene Gesamtleistung an die Netzleitvorrichtung des Stromnetzes. Die Gesamtleistung kann, insbesondere innerhalb des Zeitbereiches, zeitabhängig sein.

Vorteilhafterweise bildet die Aggregatoreinheit durch die erfindungsgemäßen Merkmale einen zentralen, netzdienlichen Aggregator aus. Die Aggregatoreinheit bündelt sinnbildlich virtuell die Leistungen der einzelnen Energiesysteme zu einer Gesamtleistung. Somit bildet die Vorrichtung beziehungsweise die Aggregatoreinheit einen effektiven beziehungsweise virtuellen Netzanschlusspunkt aus, der die zeitabhängige Gesamtleistung aufweist.

Mit anderen Worten ist ein Grundgedanke der vorliegenden Erfindung der zentrale Aggregator (Aggregatoreinheit), der die Leistungen sinnbildlich an einem virtuellen Netzanschlusspunkt des Stromnetzes zunächst aggregiert und somit vorhersagt. Anschließend kann eine entsprechende netzdienliche Steuerung der Energiesysteme beziehungsweise ihrer Betriebsmittel vorgesehen sein. Durch die Aggregation der Aggregatoreinheit und durch das Übermitteln der Gesamtleistung an die Netzleitvorrichtung kann diese gemäß der zu erwartenden Gesamtleistung entsprechende Maßnahmen vorsehen und/oder einleiten, damit die Netzrandbedingungen an dem genannten virtuellen Netzanschlusspunkt (Aggregator) eingehalten werden.

Hierbei weist die vorliegende Erfindung für den Netzbetreiber einen oder mehrere der folgenden Vorteile auf:

- Ein größeres, gebündeltes Flexibilitätspotential auf Teilnehmerseite zum Ausgleichen von Leistungsspitzen wird verfügbar gemacht, beispielsweise durch ein Nutzen von Speichern, Lastverschiebung und/oder Lastzuweisung.

- Es können technische Grenzen für den virtuellen Netzanschlusspunkt vorgegeben werden, sodass es nicht erforderlich ist, die einzelnen Anlagen zu steuern und insbesondere Photovoltaikanlagen abzuregeln.

- Das Stromnetz wird aktiv durch die Energiesysteme beziehungsweise die erfindungsgemäße Vorrichtung entlastet.

- Das Stromnetz kann effizienter genutzt werden, ein Netzausbau kann reduziert werden und die damit verbundenen Einschränkungen können verschoben werden.

Für die Energiesysteme (Teilnehmer) bilden sich eine oder mehrere der folgenden Vorteile aus:

- Der Betrieb ihrer Anlagen wird durch die zentrale Aggregation optimiert. Dadurch können zudem, je nach regulatorischen Randbedingungen, Betriebskosten reduziert werden.
- Eine zusätzliche Vergütung des Netzbetreibers für den netzfreundlichen Betrieb ihrer Anlagen kann vorgesehen sein.
- Ein Einhalten von technischen Vorrausetzungen für eine Genehmigung der Installation neuer Anlagen, beispielsweise von Ladesäulen, ist im gesamten Netzgebiet wahrscheinlicher.

- Die angebotene Flexibilität mehrerer Energiesysteme kann weiterhin verhindern, dass erneuerbare Energien aufgrund von fehlender Netzkapazität abgeregelt werden müssen. Somit trägt die Erfindung zum nachhaltigen Betrieb der Netzinfrastruktur bei.

Das erfindungsgemäße Verfahren zur Aggregation von elektrischen Leistungen innerhalb eines Stromnetzes mittels einer Vorrichtung, wobei die Vorrichtung eine bezüglich mehrerer Energiesysteme $i$ zentrale Aggregatoreinheit umfasst, ist gekennzeichnet dadurch, dass mittels der Aggregatoreinheit von jedem der Energiesysteme $i$ wenigstens eine für einen festgelegten Zeitbereich T vorgesehene Einspeiseleistung $P_{i;t}^{\text{in}}$ und/oder Ausspeiseleistung $P_{i;t}^{\text{out}}$ empfangen wird, wobei die empfangenen Einspeiseleistungen $P_{i;t}^{\text{in}}$ und Ausspeiseleistungen $P_{i;t}^{\text{out}}$ mittels der Aggregatoreinheit zu einer Gesamtleistung $P_{t}^{\text{agg}}$ aggregiert werden, und die Gesamtleistung $P_{t}^{\text{agg}}$ an eine Netzleitvorrichtung des Stromnetzes durch die Aggregatoreinheit übermittelt wird.

Es ergeben sich zur erfindungsgemäßen Vorrichtung gleichartige, gleichwertige und gleichwirkende Vorteile und/oder Ausgestaltungen des erfindungsgemäßen Verfahrens.

Gemäß einer vorteilhaften Ausgestaltung der Erfindung ist die die Aggregatoreinheit dazu eingerichtet, die Gesamtleistung $P_{t}^{\text{agg}}$ gemäß

$$P_{t}^{\text{agg}} = \sum_{i} P_{i;t}^{\text{in}} - P_{i;t}^{\text{out}}$$ für alle $t \in T$ zu ermitteln.

Vorteilhafterweise werden damit Einspeisungen und Ausspeisungen bezüglich ihres Vorzeichens unterschieden. Vorteilhafterweise ist dadurch die Gesamtleistung umso geringer, je geringer der Unterschied zwischen Einspeisung und Ausspeisung ist, wobei bestenfalls die lokalen Einspeisungen die lokalen Ausspeisungen abdecken und somit die Gesamtleistung einen Wert in der Nähe von Null aufweist. Nur wenn der lokale Bedarf nicht durch die lokale Einspeisung gedeckt wird oder mehr eingespeist als ausgespeist wird, weist die Gesamtleistungen einen von Null verschiedenen Wert auf. Somit können durch die oben genannte vorteilhafte Aggregation Erzeugung und Verbrauch verbessert in Übereinstimmung gebracht werden.

In einer vorteilhaften Weiterbildung der Erfindung ist die Aggregatoreinheit weiterhin dazu ausgebildet, eine Anzahl, Steuerbarkeit, Messwerte, Stellgrößen, Nennleistungen, Kapazitäten, Betriebsgrenzen und/oder Wirkungsgrade von energietechnischen Anlagen der Energiesysteme $i$ zu empfangen.

Dadurch werden vorteilhafterweise die Aggregation und die Steuerung des Stromnetzes durch die Netzleitvorrichtung verbessert. Die Aggregatoreinheit leitet insbesondere die empfangenen Daten/Informationen an die Netzleitvorrichtung weiter. Die genannten Daten/Informationen sind typischerweise zeitabhängig. Beispielsweise werden ihre Zeitreihen übermittelt. Hierbei stehen die genannten Daten/Informationen vorteilhafterweise lediglich der zentralen Aggregatoreinheit zur Verfügung. Die einzelnen Energiesysteme haben somit vorteilhafterweise keine Kenntnis über die von anderen Energiesystemen übermittelten Daten/Informationen. Weiterhin kann das Übermitteln von historischen Daten beziehungsweise Zeitreihen vorgesehen sein.

Gemäß einer vorteilhaften Ausgestaltung der Erfindung umfasst die Vorrichtung die Netzleitvorrichtung, wobei die Netzleitvorrichtung dazu ausgebildet ist, basierend auf der empfangenen Gesamtleistung $P_{t}^{\text{agg}}$ einen Netzbetrieb des Stromnetzes für den Zeitbereich $T$ zu simulieren.

Mit anderen Worten simuliert die Netzleitvorrichtung basierend auf der durch die Aggregatoreinheit übermittelten Vorhersage (Gesamtleistung) die Netzbetriebsführung für einen Vorhersagezeitraum, insbesondere für den Zeitbereich $T$, unter Berücksichtigung der installierten Transformatoren, Kabel und dergleichen sowie unter Berücksichtigung weiterer Netzteilnehmer. Bei unzulässigen Betriebsbedingungen des elektrischen Netzes, beispielweise einer Überlastung eines Ortsnetztransformators, kann die Netzleitvorrichtung Grenzen für die maximale Ein- und Rückspeisung am durch die Aggregatoreinheit ausgebildeten effektiven beziehungsweise virtuellen Netzanschlusspunkt vorgeben. Dadurch wird vorteilhafterweise ein zulässiger Betrieb ermöglicht.

In einer vorteilhaften Weiterbildung der Erfindung ist die Netzleitvorrichtung dazu ausgebildet, basierend auf der durchgeführten Simulation des Netzbetriebs einen Schwellenwert für die Gesamtleistung $P_t^{agg}$ an die Aggregatoreinheit zu übermitteln, wobei die Aggregatoreinheit dazu ausgebildet ist, eine oder mehrere der Einspeiseleistungen $P_{i;t}^{in}$ und/oder Ausspeiseleistungen $P_{i;t}^{out}$ derart zu reduzieren und/oder zeitlich zu verschieben, dass der Schwellenwert für die Gesamtleistung $P_t^{agg}$ eingehalten wird.

Dadurch können vorteilhafterweise Netzrandbedingungen, beispielsweise bezüglich Spannung, Strom und/oder Leistung, am virtuellen Netzanschlusspunkt verbessert eingehalten werden. Die Steuerung der Aggregatoreinheit kann hierbei mittelbar über die Vorgabe und das Weiterleiten von Sollwerten an die entsprechenden Energiesysteme und ihren energietechnischen Anlagen erfolgen.

Gemäß einer vorteilhaften Ausgestaltung der vorliegenden Erfindung umfasst die Aggregatoreinheit eine Optimierungseinheit, wobei die Optimierungseinheit dazu eingerichtet ist, Sollwerte für eine Steuerung der für die Einspeiseleistung $P_{i;t}^{in}$ und Ausspeisleistung $P_{i;t}^{out}$ vorgesehenen energietechnischen Anlagen der Energiesysteme *i* mittels eines mathematischen Optimierungsverfahrens zu ermitteln, wobei die Aggregatoreinheit dazu ausgebildet ist, die energietechnischen Anlagen basierend auf den ermittelten Sollwerten zu steuern.

Vorteilhafterweise wird dadurch ein effizienterer Betrieb des Stromnetzes beziehungsweise der Energiesysteme und ihrer energietechnischen Anlagen ermöglicht. Hierbei werden die Sollwerte mittels der mathematischen Optimierung numerisch ermittelt. Das Optimierungsverfahren basiert auf einer Zielfunktion, die maximiert oder minimiert. Hierbei quantifiziert die Zielfunktion ein technisches Ziel, welches erreicht werden soll, beispielsweise eine Minimierung der Kohlenstoffdioxidemissionen, eine Maximierung des Energieumsatzes, eine Maximierung der sozialen Wohlfahrt und/oder eine Minimierung der Gesamtkosten aller Energiesysteme. Zum Erreichen des optimalen Betriebs werden somit mittels der Optimierung die Sollwerte für alle Betriebsmittel beziehungsweise Energiesysteme innerhalb der Aggregation ermittelt und vorgegeben.

In einer vorteilhaften Weiterbildung der Erfindung ist die Optimierungseinheit dazu eingerichtet, physikalische und/oder technische Grenzwerte des Stromnetzes beim Ermitteln der Sollwerte zu berücksichtigen.

Die vorgegebenen physikalischen und/oder technischen Grenzen des Stromnetzes werden vorteilhafterweise durch die Formulierung als Randbedingungen des Optimierungsproblems eingehalten.

Gemäß einer vorteilhaften Ausgestaltung der Erfindung erfolgt basierend auf der an die Netzleitvorrichtung übermittelte Gesamtleistung $P_t^{agg}$ eine Steuerung des Stromnetzes durch die Netzleitvorrichtung.

Dadurch kann vorteilhafterweise die Steuerung des Stromnetzes verbessert werden. Insbesondere können Überbelastungen des Stromnetzes vermindert und bestenfalls vermieden werden. Hierbei kann die Steuerung durch die Netzleitvorrichtung durch das Steuern von Betriebsmitteln des Stromnetzes, beispielsweise regelbare Ortsnetztransformatoren und/oder dergleichen erfolgen. Weiterhin kann die Steuerung durch ein unmittelbares oder mittelbares Steuern der energietechnischen Anlagen der Energiesysteme erfolgen.

In einer vorteilhaften Weiterbildung der Erfindung umfasst die Steuerung des Stromnetzes ein Zuordnen von elektrischen Fahrzeugen zu an dem Stromnetz angeschlossenen Ladestationen.

Vorteilhafterweise können dadurch lokale Überlastungen des Stromnetzes durch das Laden von elektrischen Fahrzeugen vermieden werden.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1    eine Vorrichtung gemäß einer Ausgestaltung der vorliegenden Erfindung; und

Figur 2    eine Ausgestaltung der vorliegenden Erfindung bezüglich des Ladens von elektrischen Fahrzeugen.

Gleichartige, gleichwertige oder gleichwirkende Elemente können in einer der Figuren oder in den Figuren mit denselben Bezugzeichen versehen sein.

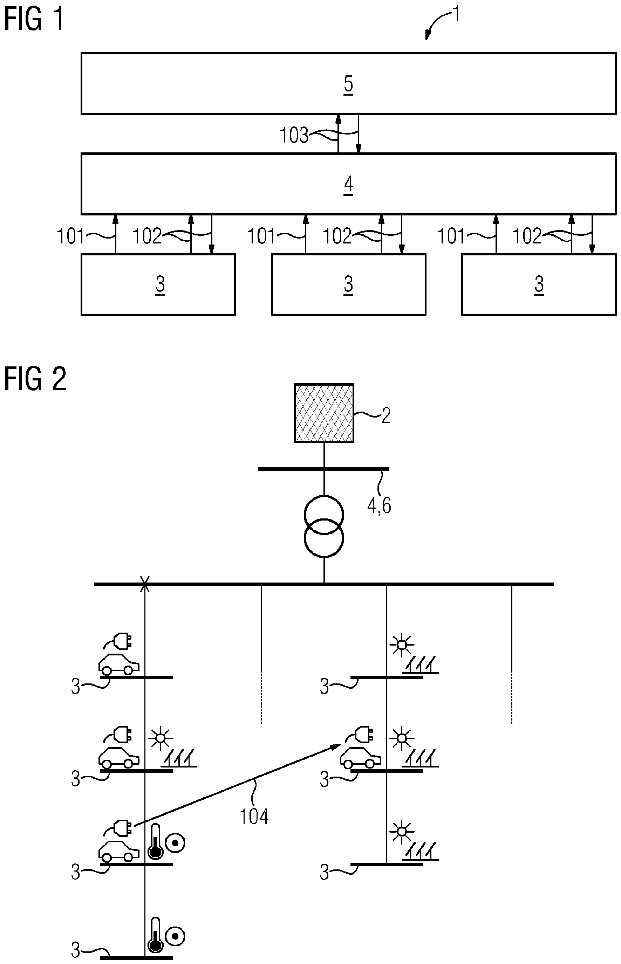

Die Figur 1 zeigt eine Vorrichtung 1 zur Aggregation von elektrischen Leistungen innerhalb eines Stromnetzes gemäß einer Ausgestaltung der vorliegenden Erfindung.

Die Vorrichtung 1 umfasst gemäß dem genannten Ausführungsbeispiel mehrere Energiesysteme 3, eine Aggregatoreinheit 4 sowie eine Netzleitvorrichtung 5. Die Aggregatoreinheit 4 ist bezüglich der Energiesysteme 3 eine zentrale Einheit. Die Netzleitvorrichtung 5 ist zur Steuerung und/oder Regelung des Stromnetzes vorgesehen. Die Netzleitvorrichtung 5 wird typischerweise vom Netzbetreiber des Stromnetzes betrieben.

Jedes der Energiesysteme 5 ist über einen Netzanschlusspunkt an dem Stromnetz angeschlossen. Die zentrale Aggregatoreinheit 4 muss nicht zwingend am Stromnetz über einen Netzanschlusspunkt angeschlossen sein. Jedoch kann ein solcher Anschluss vorgesehen sein.

Die Energiesysteme 3 können mit der Aggregatoreinheit 4 Daten/Informationen austauschen, beispielsweise über entsprechend ausgebildete und geeignete Datenschnittstellen. Eine Datenübermittlung ist in der Figur 1 durch Pfeile symbolisiert.

In einem ersten Schritt meldet sich jedes der Energiesysteme 3 bei der zentralen Aggregatoreinheit 4 an und übermittelt initiale Informationen über die Anzahl, Steuerbarkeit, Stellgrößen, Nennleistungen, Leistungen, Kapazitäten, Betriebsgrenzen und/oder Wirkungsgrade seiner Betriebsmittel. Weiterhin können aktuelle und/oder historische Messwerte in Form von Daten übermittelt werden. Das Übermitteln der genannten initialen Daten ist durch die Pfeile 101 gekennzeichnet.

In einem weiteren Schritt können die Energiesysteme 3 weitere Messwerte und/oder Leistungsvorhersagen bezüglich ihrer Betriebsmittel an die Aggregatoreinheit 4 übermitteln (Pfeile 102). Hierbei können ebenfalls Daten/Informationen von der Aggregatoreinheit 4 an die Energiesysteme 3 zurückgemeldet werden. Insbesondere übermitteln die Energiesysteme 3 eine jeweilige für einen festgelegten Zeitbereich vorgesehene Einspeiseleistung und/oder Ausspeiseleistung an die Aggregatoreinheit 4. Diese können auf ermittelten Vorhersagen basieren.

Die Aggregatoreinheit 4 empfängt die übermittelten Daten und führt diese zusammen. Hierzu ermittelt die Aggregatoreinheit 4 eine in einem Zeitbereich vorgesehene Gesamtleistung der Energiesysteme 3 durch das Bilden der Summe der übertragenen Einspeiseleistungen, wobei in der Summe die Einspeiseleistungen und Ausspeisleistungen ein verschiedenes Vorzeichen aufweisen. Bevorzugt wird die Gesamtleistung $P_t^{\mathrm{agg}}$ gemäß

$$P_t^{\mathrm{agg}} = \sum_i P_{i;t}^{\mathrm{in}} - P_{i;t}^{\mathrm{out}}$$

für alle $t$ innerhalb des Zeitbereiches $T$ ermittelt, wobei über die Energiesysteme $i$ summiert wird. Der Zeitbereich $T$ ist beispielsweise ein kommender Tag, insbesondere der nächste Tag.

Der Aggregatoreinheit 4 kann somit die vorgesehene und ermittelte Gesamtleistung zugeordnet werden. Die Aggregatoreinheit 4 bildet somit ein bezüglich der Energiesysteme 3 zentrales Energiesystem aus, welches die in diesem Sinne virtuelle Gesamtleistung über einen virtuellen Netzanschlusspunkt bereitstellt. Der Netzanschlusspunkt ist sinnbildlich deshalb virtuell, da die Aggregatoreinheit 4 nicht die Gesamtleistung einspeist oder ausspeist, sondern die einzelnen Energiesysteme 3 über ihren jeweiligen Netzanschlusspunkt. Die Aggregatoreinheit 4 gibt lediglich die Information über die ermittelte Gesamtleistung an die Netzleitvorrichtung 5 des Netzbetreibers weiter (Pfeile 103). Dadurch ist der Netzbetreiber in Kenntnis darüber, welche zeitabhängige Gesamtleistung innerhalb des Zeitbereiches zu erwarten beziehungsweise vorgesehen Gesamtleistung ist, sodass die Netzleitvorrichtung 5 entsprechende netzdienliche und/oder netzausgleichende Maßnahmen vorsehen, einleiten und/oder durchführen kann.

Hierzu übermittelt die Aggregatoreinheit 4 die Leistungsvorhersage (Gesamtleistung) für den virtuellen Netzanschlusspunkt an die Netzleitvorrichtung 5. Die Netzleitvorrichtung 5 übermittelt darauf basierend Leistungsgrenzen für den virtuellen Netzanschlusspunkt an die Aggregatoreinheit 4, die diese durch entsprechende Sollwerte an die Energiesysteme 3 weitergibt. Anschließend werden die Sollwerte durch lokale Steuereinheiten der Betriebsmittel der Energiesysteme 3 umgesetzt. Dadurch bildet sich somit eine Steuerung des Stromnetzes durch die Netzleitvorrichtung 5 basierend auf der durch die Aggregatoreinheit 4 übermittelten Gesamtleistung aus.

Die Figur 2 zeigt eine Ergänzung der in Figur 1 dargestellten Vorrichtung 1. Somit ist das unter Figur 1 gesagte unmittelbar und eindeutig auf Figur 2 übertragbar.

In der Figur 2 sind die Energiesysteme 3 als Ladestationen für elektrische Fahrzeuge, insbesondere Elektroautos ausgebildet. Die Ladestationen 3 beziehungsweise Ladesäulen 3 sind an einem gemeinsamen Stromnetz 2 über verschiedene Stränge angeschlossen. Wie bereits unter Figur 1 genannt, bildet die Aggregatoreinheit 4 sinnbildlich einen virtuellen Netzanschlusspunkt 6 aus.

Basierend auf der Aggregatoreinheit 4 und bereits vorhandenen Parametern der Ladesäulen sowie voraussichtlichen Ladevorgängen, der Netzbelastung, lokaler erneuerbarer Stromerzeugung, den Energiepreisen und/oder des netzknotenaufgelösten $CO_2$-Footprints der Stromgestehung, kann Teilnehmern nach einer Optimierung der Aggregatoreinheit 4 eine andere Ladesäulen 3 zugewiesen werden. Dies ist durch den Pfeil 104 symbolisiert.

Beispielsweise sei zu einem bestimmten Zeitpunkt ein Strang im Stromnetz 2, insbesondere im Niederspannungsnetz, bereits überlastet. Dann kann für das elektrische Fahrzeug eines Teilnehmers 3, welches typischerweise über diesen Strang geladen wird, eine Ladesäule 3 an einem anderen Strang, der nicht voll ausgelastet ist, in möglichst räumlicher Nähe, zugewiesen werden (Pfeil 104). Hierbei wird berücksichtigt, ob die neu zugewiesene Ladesäule 3 frei zugänglich ist, das heißt beispielsweise nicht in einem Carport angeordnet ist, und ob diese nicht bereits belegt ist. Hierzu können bekannte Verfahren verwendet werden, beispielsweise mittels einer Bilderkennung.

Hierzu kann die Aggregatoreinheit 4 ein Optimierungsverfahren durchführen, welches auf eine Zielfunktion basiert. Die Zielfunktion kann zur Maximierung der sozialen Wohlfahrt, zur Minimierung der Gesamtkosten und/oder zur Minimierung der Kohlenstoffdioxidemissionen aller Teilnehmer 3 führen. Die vorgegebenen Grenzen des Netzbetreibers werden durch die Formulierung als Randbedingungen des Optimierungsproblems eingehalten. Zum Erreichen des dadurch ermittelten optimalen Betriebs werden Sollwerte für alle Betriebsmittel innerhalb der Aggregation durch die Aggregatoreinheit 4 vorgegeben.

Auch wenn die Strommenge über den Netzanschlusspunkt eines anderen Teilnehmers 3 zur Verfügung gestellt wird, erfolgt die Verrechnung dediziert anhand der Messwerte dieser Ladesäule 3 und den Informationen über den Ladevorgang durch die Aggregatoreinheit 4.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

| | |
|---|---|
| 1 | Vorrichtung |
| 2 | Stromnetz |
| 3 | Energiesystem |
| 4 | Aggregatoreinheit |
| 5 | Netzleitvorrichtung |
| 6 | virtueller Netzanschlusspunkt Aggregatoreinheit |
| 101,...,104 | Pfeil |

**Patentansprüche**

1. Vorrichtung (1) zur Aggregation von elektrischen Leistungen innerhalb eines Stromnetzes (2), umfassend eine bezüglich mehrerer Energiesysteme $i$ (3) zentrale Aggregatoreinheit (4), **dadurch gekennzeichnet, dass** die Aggregatoreinheit (4) dazu ausgebildet ist, von jedem der Energiesysteme $i$ (3) wenigstens eine für einen festgelegten Zeitbereich $T$ vorgesehene Einspeiseleistung $P_{i;t}^{\mathrm{in}}$ und/oder Ausspeiseleistung $P_{i;t}^{\mathrm{out}}$ zu empfangen, wobei die Aggregatoreinheit (4) weiterhin dazu eingerichtet ist, die empfangenen Einspeiseleistungen $P_{i;t}^{\mathrm{in}}$ und Ausspeiseleistungen $P_{i;t}^{\mathrm{out}}$ zu einer Gesamtleistung $P_{t}^{\mathrm{agg}}$ zu aggregieren, und die ermittelte Gesamtleistung $P_{t}^{\mathrm{agg}}$ an eine Netzleitvorrichtung (5) des Stromnetzes (2) zu übermitteln.

2. Vorrichtung (1) gemäß Anspruch 1, **dadurch gekennzeichnet, dass** die Aggregatoreinheit (4) dazu eingerichtet ist, die Gesamtleistung $P_{t}^{\mathrm{agg}}$ gemäß

$$P_{t}^{\mathrm{agg}} = \sum_{i} P_{i;t}^{\mathrm{in}} - P_{i;t}^{\mathrm{out}}$$

für alle $t \in T$ zu ermitteln.

3. Vorrichtung (1) gemäß Anspruch 1 oder 2, **dadurch gekennzeichnet, dass** die Aggregatoreinheit (4) weiterhin dazu ausgebildet ist, eine Anzahl, Steuerbarkeit, Messwerte, Stellgrößen, Nennleistungen, Kapazitäten, Betriebsgrenzen und/oder Wirkungsgrade von energietechnischen Anlagen der Energiesysteme $i$ (3) zu empfangen.

4. Vorrichtung (1) gemäß einem der vorhergehenden Ansprüche, **dadurch gekennzeichnet, dass** die Vorrichtung (1) die Netzleitvorrichtung (5) umfasst, wobei die Netzleitvorrichtung (5) dazu ausgebildet ist, basierend auf der empfangenen Gesamtleistung $P_{t}^{\mathrm{agg}}$ einen Netzbetrieb des Stromnetzes (2) für den Zeitbereich $T$ zu simulieren.

5. Vorrichtung gemäß Anspruch 4, **dadurch gekennzeichnet, dass** die Netzleitvorrichtung (5) dazu ausgebildet ist, basierend auf der durchgeführten Simulation des Netzbetriebs einen Schwellenwert für die Gesamtleistung $P_{t}^{\mathrm{agg}}$ an die Aggregatoreinheit (4) zu übermitteln, wobei die Aggregatoreinheit (4) dazu ausgebildet ist, eine oder mehrere der Einspeiseleistungen $P_{i;t}^{\mathrm{in}}$ und/oder Ausspeiseleistungen $P_{i;t}^{\mathrm{out}}$ derart zu reduzieren und/oder zeitlich zu verschieben, dass der Schwellenwert für die Gesamtleistung $P_{t}^{\mathrm{agg}}$ eingehalten wird.

6. Vorrichtung (1) gemäß einem der vorhergehenden Ansprüche, **dadurch gekennzeichnet, dass** die Aggregatoreinheit (4) eine Optimierungseinheit umfasst, wobei die Optimierungseinheit dazu eingerichtet ist, Sollwerte für eine Steuerung der für die Einspeiseleistung $P_{i;t}^{\mathrm{in}}$ und Ausspeisleistung $P_{i;t}^{\mathrm{out}}$ vorgesehenen energietechnischen Anlagen der Energiesysteme $i$ (3) mittels eines mathematischen Optimierungsverfahrens zu ermitteln, wobei die Aggregatoreinheit (4) dazu ausgebildet ist, die energietechnischen Anlagen basierend auf den ermittelten Sollwerten zu steuern.

7. Vorrichtung gemäß Anspruch 6, **dadurch gekennzeichnet, dass** die Optimierungseinheit dazu eingerichtet ist, physikalische und/oder technische Grenzwerte des Stromnetzes (2) beim Ermitteln der Sollwerte zu berücksichtigen.

8. Verfahren zur Aggregation von elektrischen Leistungen innerhalb eines Stromnetzes (2) mittels einer Vorrichtung (1), wobei die Vorrichtung (1) eine bezüglich mehrerer Energiesysteme $i$ (3) zentrale Aggregatoreinheit (4) umfasst, **gekennzeichnet da-**

**durch, dass** mittels der Aggregatoreinheit (4) von jedem der Energiesysteme *i* (3) wenigstens eine für einen festgelegten Zeitbereich *T* vorgesehene Einspeiseleistung $P_{i;t}^{\text{in}}$ und/oder Ausspeiseleistung $P_{i;t}^{\text{out}}$ empfangen wird, wobei die empfangenen Einspeiseleistungen $P_{i;t}^{\text{in}}$ und Ausspeiseleistungen $P_{i;t}^{\text{out}}$ mittels der Aggregatoreinheit (4) zu einer Gesamtleistung $P_t^{\text{agg}}$ aggregiert werden, und die Gesamtleistung $P_t^{\text{agg}}$ an eine Netzleitvorrichtung (5) des Stromnetzes (2) durch die Aggregatoreinheit (4) übermittelt wird.

9. Verfahren gemäß Anspruch 8, **gekennzeichnet dadurch, dass** basierend auf der an die Netzleitvorrichtung (5) übermittelte Gesamtleistung $P_t^{\text{agg}}$ eine Steuerung des Stromnetzes (2) durch die Netzleitvorrichtung (5) erfolgt.

10. Verfahren gemäß Anspruch 9, **gekennzeichnet dadurch, dass** die Steuerung des Stromnetzes (2) ein Zuordnen von elektrischen Fahrzeugen zu an dem Stromnetz (2) angeschlossenen Ladestationen (3) umfasst.

FIG 1

FIG 2

Europäisches Patentamt
European Patent Office
Office européen des brevets

# EUROPÄISCHER RECHERCHENBERICHT

**Nummer der Anmeldung**

EP 22 18 5510

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2020 203853 A1 (SIEMENS AG [DE]) 30. September 2021 (2021-09-30) | 1-5,8-10 | INV. H02J3/32 |
| Y | * Absatz [0012] – Absatz [0046] * | 6,7 | H02J3/38 H02J3/48 |
| | ----- | | |
| X | DE 10 2020 207706 A1 (SIEMENS AG [DE]) 23. Dezember 2021 (2021-12-23) | 1,2,4,5, 8 | |
| Y | * Absatz [0007] – Absatz [0081] * | 6,7 | |
| | ----- | | |
| X | DE 10 2020 200811 A1 (SIEMENS AG [DE]) 29. Juli 2021 (2021-07-29) | 1-3,8 | |
| Y | * Absatz [0038] – Absatz [0052] * | 6,7 | |
| | ----- | | |
| Y | DE 10 2020 212610 A1 (SIEMENS AG [DE]) 7. April 2022 (2022-04-07) * Absätze [0033], [0034] * | 6,7 | |
| | ----- | | |
| Y | US 2021/273483 A1 (DING FEI [US] ET AL) 2. September 2021 (2021-09-02) * Absatz [0246] – Absatz [0251] * | 6,7 | |
| | ----- | | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 11. Januar 2023 | Jonda, Sven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 5510

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2023

| Im Recherchenbericht angeführtes Patentdokument | Datum der Veröffentlichung | Mitglied(er) der Patentfamilie | Datum der Veröffentlichung |
|---|---|---|---|
| DE 102020203853 A1 | 30-09-2021 | AU 2020437492 A1 | 13-10-2022 |
| | | CN 115315712 A | 08-11-2022 |
| | | DE 102020203853 A1 | 30-09-2021 |
| | | EP 4100897 A1 | 14-12-2022 |
| | | KR 20220156061 A | 24-11-2022 |
| | | WO 2021190778 A1 | 30-09-2021 |
| DE 102020207706 A1 | 23-12-2021 | DE 102020207706 A1 | 23-12-2021 |
| | | WO 2021259540 A1 | 30-12-2021 |
| DE 102020200811 A1 | 29-07-2021 | AU 2021209785 A1 | 08-09-2022 |
| | | CN 115039310 A | 09-09-2022 |
| | | DE 102020200811 A1 | 29-07-2021 |
| | | EP 4055678 A1 | 14-09-2022 |
| | | KR 20220123314 A | 06-09-2022 |
| | | WO 2021148288 A1 | 29-07-2021 |
| DE 102020212610 A1 | 07-04-2022 | DE 102020212610 A1 | 07-04-2022 |
| | | WO 2022073667 A1 | 14-04-2022 |
| US 2021273483 A1 | 02-09-2021 | US 2021273483 A1 | 02-09-2021 |
| | | WO 2021174196 A1 | 02-09-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3518369 A1